(19) Europäisches Patentamt
European Patent Office
Office européen des brevets

(11) EP 4 464 734 A1

(12) # EUROPEAN PATENT APPLICATION

(43) Date of publication:
**20.11.2024 Bulletin 2024/47**

(21) Application number: **23173463.3**

(22) Date of filing: **15.05.2023**

(51) International Patent Classification (IPC):
***C08J 5/18*** *(2006.01)* ***C08L 23/12*** *(2006.01)*

(52) Cooperative Patent Classification (CPC):
(C-Sets available)
**C08L 23/12; C08J 5/18;** C08L 2203/16;
C08L 2203/20 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Borealis AG**
  **1020 Vienna (AT)**
- **TOPAS Advanced Polymers GmbH**
  **65479 Raunheim (DE)**

(72) Inventors:
- **Gitsas, Antonios**
  **4021 Linz (AT)**
- **Wahner, Udo**
  **4021 Linz (AT)**
- **Tranchida, Davide**
  **4021 Linz (AT)**
- **Gkourmpis, Thomas**
  **444 86 Stenungsund (SE)**
- **Jamieson, Scott**
  **4021 Linz (AT)**
- **Gloger, Dietrich**
  **4021 Linz (AT)**
- **Velichko, Hristov**
  **4021 Linz (AT)**
- **Opsteyn, Jeroen**
  **3583 Beringen (BE)**
- **Englund, Villgot**
  **444 86 Stenungsund (SE)**
- **Andersson, Carl Johan**
  **444 86 Stenungsund (SE)**
- **Goerlitz, Wolfram**
  **65193 Wiesbaden (DE)**
- **Hatke, Wilfried**
  **65779 Kelkheim (DE)**

(74) Representative: **Ter Meer Steinmeister & Partner Patentanwälte mbB**
**Nymphenburger Straße 4**
**80335 München (DE)**

(54) **COMPOSITION COMPRISING POLYPROPYLENE AND CYCLIC OLEFIN POLYMER FOR CAPACITORS**

(57) The present invention relates to a composition comprising 70 to 95 wt.-% based on the total weight of the polypropylene composition of a high isotactic homopolymer of propylene, and 5 to 30 wt.-% based on the total weight of the polypropylene composition of a cyclic olefin polymer composition having a glass transition temperature in a range of from 140 to 155 °C. The present invention is, furthermore, directed to a cast film comprising the polypropylene composition and a biaxially oriented film comprising the polypropylene composition. Apart from that, a capacitor comprising the biaxially oriented film is provided.

Figure 3

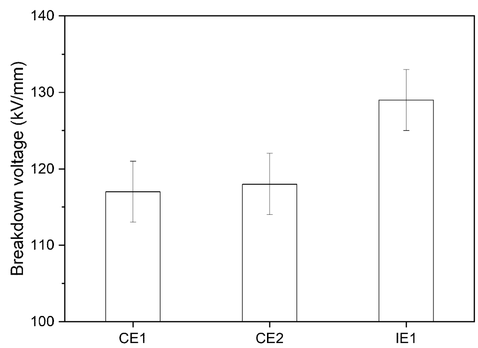


EP 4 464 734 A1

(52) Cooperative Patent Classification (CPC): (Cont.)

C-Sets
**C08L 23/12, C08L 23/0823;**
**C08L 23/12, C08L 23/0823, C08L 23/0823**

## Description

### Field of the invention

The present invention relates to a composition comprising 70 to 95 wt.-% based on the total weight of the polypropylene composition of a high isotactic homopolymer of propylene, and 5 to 30 wt.-% based on the total weight of the polypropylene composition of a cyclic olefin polymer composition having a glass transition temperature in a range of from 140 to 155 °C. The present invention is, furthermore, directed to a cast film comprising the polypropylene composition and a biaxially oriented film comprising the polypropylene composition. Apart from that, a capacitor comprising the biaxially oriented film is provided.

### Technical background

Polypropylene has a relatively high dielectric constant, a low dissipation factor and a good dielectric strength. Due to this, polypropylene has been successfully used as a dielectric in various capacitor film applications. Yet, an issue with the known polypropylene capacitor grades is their limited maximum operating temperature. The new generation of inverters, for example traction inverters for electric mobility and inverters for renewable power such as solar and wind, call for a higher temperature resistance of capacitor films.

The demand for an increased maximum operating temperature or - differently speaking - the demand for a higher durability at a predetermined temperature level, has been addressed in different ways up to now.

CN101724195 A proposes to combine polypropylene with a composite rubber powder at a weight ratio of 100 : 0.01 - 2.0. The composite rubber powder has a particle size of 20 to 100 nm and consists of a silicone rubber powder and a nucleating agent at a weight ratio of 99 : 1 to 90 : 10. It is prepared by mixing silicon rubber latex, obtained via irradiation vulcanization, with an aqueous solution or emulsion of the nucleating agent.

EP 2 995 641 A1 teaches that a high temperature resistance can be accomplished by combining beta-nucleation of polypropylene having high purity with a long chain branched polypropylene. More specifically, it provides a polypropylene composition comprising 95.0 to 99.9 wt.-% of propylene homopolymer with a specific melt flow rate and a very low ash content, 0.1 to 5.0 wt.-% of long chain branched polypropylene and up to 1000 ppm of betanucleating agent.

WO 2018/210854 A1 and WO 2018/197034 A1 suggest that it may be preferable to blend polypropylene with certain amounts of specific cyclic olefin copolymers in order to obtain materials that are suitable for high temperature capacitor applications. In this context, WO 2018/210854 A1 relies on ethylene norbornene copolymers with specific norbornene contents, whereas WO 2018/197034 A1 suggests cyclic olefin polymers having a glass transition temperature in a broad range from 120 to 170 °C.

Yet, in the above approaches, the increase in the temperature resistance of the capacitor polypropylene compositions has only been achieved at the expense of other crucial properties. Mechanical properties such as low shrinkage and high stiffness as well as the capability to endure high voltages have, for example, been sacrificed to a certain extent.

Thus, there is still a need to provide polypropylene compositions having an improved property set for capacitor applications, *i.e.* a high temperature resistance, a high electrical breakdown strength and suitable mechanical properties. Accordingly, it is an objective of the present invention to overcome the disadvantages of the known compositions and to provide an according polypropylene composition. Another objective of the present invention is the provision of a polypropylene film having superior performance in capacitor applications. Last but not least, the present invention aims at providing a capacitor with improved specifications. Furthermore, capacitor films also need to have a high electrical breakdown strength and good mechanical properties such as a low shrinkage and a high stiffness.

### Summary of the Invention

The above objectives are solved by the polypropylene composition with the features of independent claim 1, the cast film with the features of claim 10, the biaxially oriented film with the features of claim 14 and the capacitor with the features of claim 15.

The polypropylene composition according to the present invention comprises 70 to 95 wt.-% based on the total weight of the polypropylene composition of a high isotactic homopolymer of propylene, and 5 to 30 wt.-% based on the total weight of the polypropylene composition of a cyclic olefin polymer composition having a glass transition temperature, measured according to ISO 11357, in a range of from 140 to 155 °C.

In an embodiment, the polypropylene composition comprises 75 to 90 wt.-%, preferably 79 to 86 wt.-%, more preferably 81 to 86 wt.-%, of the high isotactic homopolymer of propylene, and 10 to 25 wt.-%, preferably 14 to 21 wt.-%, more preferably 14 to 19 wt.-%, of the cyclic olefin polymer composition, the contents of each being again based on the total weight of the polypropylene composition.

The selection of a cyclic olefin polymer composition having a glass transition temperature in a very specific

and small range of from 140 to 155 °C and its combination with the high isotactic homopolymer of propylene is technically advantageous. On the one hand, the glass transition temperature step of the present propylene composition is broadened compared to the pure high isotactic homopolymer of propylene. This results in favorable mechanical properties and, thus, facilitates the processing of the composition into films for capacitor applications. On the other hand, the polypropylene composition according to the present invention shows excellent structural and dielectric stability at high temperatures.

In a preferred embodiment, the polypropylene composition is obtained by melt-blending the high isotactic homopolymer of propylene and the cyclic olefin polymer composition. A device, in which melt-blending can be carried out, may be selected from the group consisting of kneaders, mills and extruders. Further, the cyclic olefin polymer composition may, itself be obtained by melt-blending at least two different cyclic olefin polymers.

In contrast to dry-blending approaches, the melt-blending approach allows producing the polypropylene composition with high homogeneity. By selecting the content of the cyclic olefin polymer composition to be from 5 to 30 wt.-%, the cyclic olefin polymer composition is finely and uniformly dispersed in a matrix of the high isotactic homopolymer of propylene. Generally, the dispersion state of the cyclic olefin polymer composition is believed to have an influence on the mechanical and electrical properties of the propylene composition. The dimensions and the shape of the domains which are formed by the cyclic olefin polymer composition in the dispersion can be analyzed with an atomic force microscope (AFM) or another type of microscope.

In view of the above, when a 250 μm thick non-oriented cast film consisting of the polypropylene composition is analyzed with AFM, preferably more than 50% ($d_{50}$), in particular more than 90% ($d_{90}$), such as 95% ($d_{95}$), of the domains of the cyclic olefin polymer have a largest dimension that is smaller than 2.0 μm.

<u>Cyclic olefin polymer composition</u>

The cyclic olefin polymer composition preferably is a thermoplastic composition.

The cyclic olefin polymer composition may comprise or may essentially consist of one type of cyclic olefin polymer or of a blend of at least two different types of cyclic olefin polymers.

It is appreciated that the term "cyclic olefin polymer" refers to a polymer comprising a cyclic olefin unit. The cyclic olefin polymer may be a cyclic olefin homopolymer or a cyclic olefin copolymer.

Within the present invention the term "copolymer" refers to polymers prepared from at least two different monomers. In other words, the term "copolymer" also covers terpolymers and copolymers with four or more different monomeric units. Thus, a cyclic olefin polymer may be a copolymer comprising a first monomeric unit, which is a cyclic olefin unit, and at least one second monomeric unit, which is different from the first monomeric unit, such as a non-cyclic olefin unit. Cyclic olefin copolymers comprising at least a first cyclic olefin unit and a second cyclic olefin unit, which is different from the first cyclic olefin unit, are equally covered by the term "cyclic olefin polymer".

The cyclic olefin polymer may either be obtained by ring-opening or ring-sustaining polymerization of at least one cyclic olefin monomer. Among these alternatives, a cyclic olefin polymer obtained by ring-sustaining polymerization is preferred.

In a further preferred embodiment, the at least one cyclic olefin monomer is selected from the group consisting of cyclopentadiene, tetracyclododecen, norbornene and derivatives of the aforementioned compounds. Norbornene and its derivatives are particularly preferred examples for the at least one cyclic olefin monomer.

Norbornene and its derivatives are preferably compounds according to formula (I),

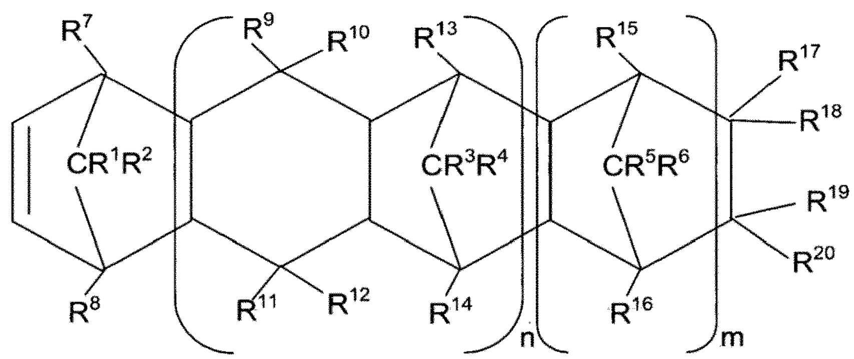

(I),

wherein n is 0 or 1,

m is 0 or an integer, in particular 0 or 1,

$R^1$, $R^2$, $R^3$, $R^4$, $R^5$, $R^6$ are independently selected from the group consisting of hydrogen, halogen, an alkyl group, a cycloalkyl group, an aryl group and an alkoxy group,

$R^7$, $R^8$, $R^9$, $R^{10}$, $R^{11}$, $R^{12}$, $R^{13}$, $R^{14}$, $R^{15}$, $R^{16}$ are independently selected from the group consisting of hydrogen and an alkyl group,

$R^{17}$, $R^{18}$, $R^{19}$, $R^{20}$ are independently selected from the group consisting of hydrogen, halogen, an alkyl group, a cycloalkyl group and an aryl group wherein $R^{17}$ and $R^{19}$ may alternatively form a cyclic ring or a cyclic system, wherein the cyclic ring or cyclic system may be saturated or unsaturated.

Further and equally preferred examples of norbornene derivatives are the compounds according to formula (II),

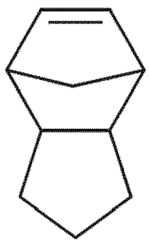
,
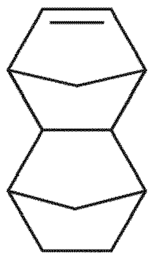
,
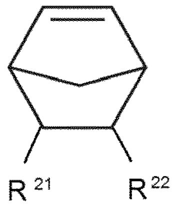
,
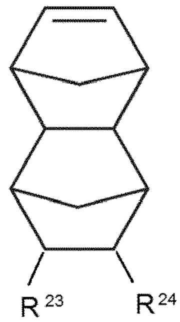
(II)

wherein $R^{21}$ and $R^{22}$ are independently selected from the group consisting of hydrogen, a $C_5$-$C_7$ cycloalkyl group, $C_5$-$C_7$ aryl group and a $C_1$-$C_4$ alkyl group and wherein $R^{23}$ and $R^{24}$ are independently selected from the group consisting of hydrogen and a $C_1$-$C_4$ alkyl group.

The non-cyclic olefin monomer can be an alpha-olefin. Non-limiting examples of alpha-olefins are $C_2$-$C_8$ alpha-olefins, such as alpha-olefins selected from the group consisting of ethylene, propylene, 1-butene, 2-methyl-1-propene (isobutylene) and 3-methyl-1-butene. Preferred alpha-olefins are linear $C_2$-$C_8$ alpha-olefins, such as ethylene and propylene. Particularly preferred is ethylene as alpha-olefin.

In one embodiment, the cyclic olefin polymer composition comprises at least one cyclic olefin copolymer selected from the group of norbornene-ethylene copolymers and tetracyclododecene-ethylene copolymers or a blend of at least two of said cyclic olefin copolymers. In a particularly preferred embodiment, the cyclic olefin polymer composition comprises or essentially consists of one norbornene-ethylene copolymer or a blend of two norbornene-ethylene copolymers with different norbornene contents. Further, non-limiting examples of cyclic olefin polymers are polymers commercially available as APEL® from Mitsui Chemical or as TOPAS® from TOPAS Advanced Polymers.

The glass transition temperature (hereinafter also referred to as "Tg") of the cyclic olefin polymer composition may be controlled by the type of monomers used, *e.g.* by the type of the at least one cyclic olefin monomer and optionally, if present, by the type of the non-cyclic olefin monomer. If the cyclic olefin polymer composition is a blend of at least two cyclic olefin polymers, the weight ratio of the cyclic olefin polymers has an influence on the glass transition temperature of the compositions as well. Further, in case the cyclic olefin polymer composition is a composition comprising at least one cyclic olefin copolymer, the amount of the cyclic olefin monomer may be used to customize the glass transition temperature of the overall composition. From norbornene-ethylene copolymers it is, for example, known that a higher glass transition temperature may be achieved by increasing the content of norbornene. The same applies to combinations of other cyclic olefin monomers with non-cyclic olefin monomers.

The cyclic olefin polymer composition may comprise cyclic olefin units, for example norbornene units, in a content of from 70 to 90 wt.-%, preferably from 75 to 85 wt.-%, more preferably from 75 to 80 wt.-%, and non-cyclic olefin units, for example ethylene units, in a content of from 10 to 30 wt.-%, preferably from 15 to 25 wt.-%, more preferably from 20 to 25 wt.-%, wherein the contents are each based on the total weight of the cyclic olefin polymer composition.

In a preferred embodiment, the cyclic olefin polymer composition may have a glass transition temperature in the range of from 140 to 150 °C. In another preferred embodiment, the cyclic olefin polymer composition may have a glass transition temperature in the range of from 145 to 155 °C.

In a particularly preferred embodiment, the cyclic olefin polymer composition comprises or essentially consists of at least a first cyclic olefin polymer (b1) and a second cyclic olefin polymer (b2). The first cyclic olefin polymer preferably has a glass transition temperature, measured according to ISO 11357, of below 140 °C, such as from 60 to below 140 °C, like from 100 to below 140 °C. The second cyclic olefin polymer preferably has a glass transition temperature, measured according to ISO 11357, of at least 155 °C, in particular of from at least 155 to 190 °C. The first cyclic olefin

polymer and the second cyclic olefin polymer may be melt-blended to form the cyclic olefin polymer composition, preferably in a weight ratio of 1:5 to 5:1, in particular in a weight ratio of 1:3 to 3:1.

It is assumed that the use of two cyclic olefin polymer with different glass transition temperatures results in a broad glass transition temperature step of the polypropylene composition and is, thus, responsible for an extended processing window of the polypropylene composition. Moreover, the use of two cyclic olefin polymers with different glass transition temperatures results in a better control of the high-temperature performance of the material.

The cyclic olefin polymer composition preferably has a $MFR_2$ (260 °C, 2.16 kg), measured according to ISO 1133, of from 2 to 50 g/10 min, preferably from 8 to 25 g/10 min.

## High isotactic homopolymer of propylene

The expression "homopolymer of propylene" as used in the present invention relates to a polypropylene that consists substantially, *i.e.* of at least 99.5 wt.-%, more preferably of at least 99.8 wt.-%, of propylene units. Preferably, only propylene units are detectable in the propylene homopolymer via $^{13}C$ NMR spectroscopy, as described in the example section below.

The high isotactic homopolymer of propylene preferably is a linear polypropylene, *i.e.* a polypropylene that does not have a detectable amount of long-chain or short-chain branches.

In a preferred embodiment of the present invention, the high isotactic homopolymer of propylene is characterized by a rather high pentad isotacticity <mmmm>, measured by $^{13}C$ NMR. More specifically, the high isotactic homopolymer of propylene may have a isotactic pentad fraction of from 93 to 99.5 %, preferably 95 to 99.0 %, more preferably from 96 to 98.5 %. In particular embodiments, the pentad isotacticity of the high isotactic homopolymer of propylene is in the range of 96.0 to 98.5 %, still more preferably in the range of 97.0 to 98.0%.

The high isotacticity preferably goes along with a high crystallinity of the material. Moreover, the high isotacticity is preferably accompanied by a low xylene cold soluble (XCS) content. Therefore, in a further preferred embodiment of the present invention, the high isotactic homopolymer of propylene of the present invention is featured by a rather low XCS content, *i.e.* by a XCS content of equal or below 2.0 wt.-%, more preferably of equal or below 1.8 wt.-%, yet more preferably equal or below 1.6 wt.-%. Thus it is in particular appreciated that the high isotactic homopolymer of propylene of the present invention has a XCS content in the range of 0.3 to equal or below 2.0 wt.-%, more preferably in the range of 0.3 to equal or below 1.8 wt.-%, yet more preferably in the range of 0.4 to equal or below 1.6 wt.-%.

Preferably, the XCS content refers to the XCs content as determined at 23 °C according to ISO 6427. It is further appreciated that the XCS content indicates that the high isotactic homopolymer of propylene is preferably free of any elastomeric polymer component, like an ethylene propylene rubber. In other words, the high isotactic homopolymer of propylene does not correspond to a heterophasic polypropylene, *i.e.* a system consisting of a polypropylene matrix in which an elastomeric phase is dispersed. Such systems are usually featured by a rather high xylene cold soluble content.

Alternatively or in addition, it is preferred that the high isotactic homopolymer of propylene of the present invention has a melt flow rate given in a specific range. For example, the high isotactic homopolymer of propylene may have a $MFR_2$ (230 °C), measured according to ISO 1133, of from 0.4 to 10 g/10 min, preferably of from 0.5 to 5 g/10 min. In a particularly preferred embodiment, the high isotactic homopolymer of propylene has a $MFR_2$ (230 °C), measured according to ISO 1133, of from 2.0 to 4.5 g/10 min. In this context, it is acknowledged that $MFR_2$ (230 °C) denotes a melt flow rate measured under a load of 2.16 kg at 230 °C.

Furthermore, the high isotactic homopolymer of propylene preferably has an ash content of 60 ppm or less, more preferably 30 ppm or less, even more preferably 20 ppm or less. Preferably, the ash content may be in a range from 5 to 30 ppm, in particular in a range from 10 to 20 ppm. A low ash content is crucial for the dielectric properties, such as the dielectric strength and the dielectric loss. The ash content may be measured according to ISO 3451-1 (1997).

The high isotactic homopolymer of propylene may have a melting temperature, Tm, measured according to ISO 11357, in a range of from 150 to 170 °C, preferably 160 to 170 °C. The crystallization temperature, Tc, of the high isotactic homopolymer of propylene as measured according to ISO 11357 may be in a range of from 110 to 130 °C, preferably of from 110 to 120 °C.

## Additives

In one embodiment, the polypropylene composition comprises 74.0 to 89.0 wt.-%, preferably 78.5 to 85.5 wt.-%, more preferably 80.5 to 85.5 wt.-%, of the high isotactic homopolymer, 10 to 25 wt.-%, preferably 14 to 21 wt.-%, more preferably 14 to 19 wt.-%, of a cyclic olefin polymer composition, and 0.0 to 1.0 wt.-%, preferably 0.0 to 0.5 wt.-%, of additives, wherein the contents of each are again based on the total weight of the polypropylene composition. Preferably the contents of the high isotactic homopolymer, the cyclic olefin polymer composition and the additives add up to 100 wt.-%.

Additives may be non-polymeric additives and/or polymeric additives. For example, the additives may be selected from the group consisting of antioxidants, stabilizers, acid scavengers, colorants, plasticizers, slip agents, antiscratch agents, dispersing agents, processing aids, lubricants, pigments, antistatic agent, and the like. Preferably, additives are selected from the group consisting of antioxidants, stabilizers and acid scavengers.

The antioxidants and stabilizers may be selected from the group of hindered phenols and more preferably from the group of hindered phenols not containing phosphorous or sulphur.

The antioxidants and stabilizers are especially preferably one or more compounds selected from the group consisting of 1,3,5-trimethyl-2,4,6-tris(3,5-di-tert-butyl-4-hydroxybenzyl)benzene (sold under trade names Irganox 1330, Anox 330, Ethanox 330 and Kinox-30), pentaerythritol tetrakis(3-(3,5-di-tert-butyl-4-hydroxyphenyl)propionate) (sold under trade names Irganox 1010, Anox 20, Ethanox 310TF and Kinox-10), octadecyl 3-(3',5'-di-tert-butyl-4-hydroxyphenyl)propionate (sold under trade names Irganox 1076, Anox PP 18 and Kinox-16), butylhydroxytoluene (sold under trade names Ionol CP and Vulkanox BHT), 1,3,5-tris(3',5'-di-tert-butyl-4'-hydroxybenzyl)-isocyanurate (sold under trade names Irganox 3114, Anox IC-14, Ethanox 314 and Kinox-34), and 3,4-dihydro-2,5,7,8-tetramethyl-2-(4,8,12-trimethyltridecyl)-2H-1-benzopyran-6-ol (sold under trade names Irganox E 210 and alpha-tocopherol).

The antioxidants and stabilizers are preferably present in a total amount of from 500 to 8000 ppm, based on the total weight of the polypropylene composition. More preferably, antioxidants and stabilizers are present in a total amount of from 800 to 7000 ppm, still more preferably of from 1000 to 6000 ppm, and in particular from 1500 to 6000 ppm, based on the total weight of the polypropylene composition. In view of the desired application of the composition in the capacitor field, the antioxidants and stabilizers preferably do not contain phosphorous containing secondary antioxidants, such as tris(2,4-ditert-butylphenyl)phosphite. Without wishing to be bound by theory, the latter compounds are believed to increase the dissipation in the final capacitor.

Acid scavengers may be salts of organic acids, such as stearates. They typically serve to neutralize acids in a polymer. Examples of such compounds are calcium stearate, zinc stearate and zinc oxide. Acid scavengers are preferably used in an amount of from 50 ppm to 2000 ppm, more preferably from 50 ppm to 1000 ppm.

## Film

The present invention furthermore provides a film comprising the polypropylene composition as described above. The film may be a cast film or a biaxially oriented film (BOPP). Furthermore, the film preferably has a thickness from 1 to 1000 μm, more preferably from 1 to 300 μm, most preferably from 1 to 250 μm, in particular from 1 to 100 μm. This is especially advantageous since current attempts are to provide electric systems with higher energy density and efficiency. Reducing the space requirement for a film in film capacitors helps to achieve this goal.

If provided as a cast film with a thickness of 250 μm, the film preferably has a dielectric breakdown voltage of 118 kV/mm or more, preferably 125 kV/mm or more, measured according to IEC 60243-1 at 90 °C. For example, the dielectric breakdown voltage of the cast film measured according to IEC 60243-1 at 90 °C and with a thickness of 250 μm may be in the range from 118 to 250 kV/mm, preferable 125 to 200 kV/mm.

It is further preferable when the cast film, if provided with a thickness of 250 μm, has a loss tangent of less than 0.001, preferably less than 0.0005, more preferably less than 0.0002, wherein the loss tangent is measured at 20 Hz and 120 °C. For example, the cast film has a loss tangent in a range from 0.00001 to 0.001, preferably 0.00001 to 0.0005, more preferably 0.00005 to 0.0002, when is measured at 20 Hz.

The conductivity of the cast film according to the present invention may be 2 fS/cm or less. For example, the conductivity of the cast film may be from 0.01 to 2 fS/cm. The conductivity may either be measured according to IEC62631-3-2 with an alternating current in a frequency range of from $10^{-2}$ to $10^{-1}$ Hz or may be taken as the inverse of the DC electrical resistance measured according to ASTM D257, each at a temperature of 90 °C and at a film thickness of 250 μm.

The biaxially oriented polypropylene film according to the present invention may be obtained in two steps. In a first step, a non-oriented film is produced by extruding the polypropylene composition through a flat die. In a second step, the non-oriented film is stretched in machine direction (MD) and transverse direction (TD). The stretching or orientation of the non-oriented film may be performed simultaneously in machine direction and transverse direction. The two steps of the method may preferably be conducted in a continuous process. Alternatively, the non-oriented film may be collected and cooled with a rotating chill roll for solidification of the film and may later on be stretched.

In an embodiment, the biaxially oriented polypropylene film comprises at least 80 wt.-%, more preferably comprises at least 90 wt.-%, yet more preferably consists of, the polypropylene composition as defined in the present invention. The biaxially oriented polypropylene film preferably has a stretching ratio of at least 4 times, preferably at least 5 times, in the machine direction and at least 4 times, preferably at least 5 times, in the transverse direction, more preferably has a stretching ratio of at least 9 times in the machine direction and at least 5 times in the transverse direction.

The biaxially oriented polypropylene film can be prepared by conventional drawing processes known in the art. Accordingly, the process for the manufacture of a biaxially oriented polypropylene film preferably may make use of the tenter method known in the art.

The tenter method is a method in which the polypropylene composition as defined herein is melt extruded from a slit die such as a T-die and cooled on a cooling drum obtaining a non-oriented film. Said film is pre-heated, for example with a heated metal roll, and then stretched in the length direction between a plurality of rolls over which a difference in peripheral speeds is established and then both edges are gripped with grippers and the sheet is stretched in the transverse direction in an oven by means of a tenter resulting in a biaxially oriented film. The temperature of said film during the longitudinal drawing is preferably controlled in such a way as to be within the temperature range of the melting point of the polypropylene composition.

Subsequently, the biaxially oriented film can be treated by corona discharge in air, nitrogen, carbon dioxide gas or any of the mixtures. If the film should be metallized for film capacitor applications, this enhances the adhesive strength to the metal that is to be deposited.

Capacitor

In another aspect, the present invention relates to a capacitor comprising the biaxially oriented film as described above. Capacitors comprising this biaxially oriented film are expected to have a longer lifetime and a higher temperature resistance than conventional capacitors. Preferably, the biaxially oriented film as described above is metallized and the capacitor is a metalized film capacitor. The metallization of the biaxially oriented film can be performed by any process that is known in the art, for example by evaporation, electrodeposition, melting, ion beam vacuum deposition, sputtering or ion plating. The thickness of the obtained metal layer may be from 100 Å (0.01 μm) to 5000 Å (0.5 μm).

## Brief Description of the Drawings

Embodiments of the present invention are illustrated by way of example and are not limited by the figures of the accompanying drawings in which identical references represent similar elements.

**Fig. 1 and Fig.** 2 show the results of dielectric spectroscopy measurements that have been carried out with example materials;

**Fig. 3** allows to compare the electrical breakdown behavior of several example materials;

**Figs 4(a)-(d)** show atomic force microscope images of several example materials.

## Detailed Description of the Drawings and Examples

Measurement Methods

*Quantification of microstructure by NMR spectroscopy*

Quantitative nuclear-magnetic resonance (NMR) spectroscopy was used to quantify the isotacticity and comonomer content of the polymers.

Quantitative $^{13}C\{^{1}H\}$ NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimized 10 mm extended temperature probehead at 125 °C using nitrogen gas for all pneumatics.

For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilizing the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^{1}H\}$ NMR spectra were processed, integrated and relevant quantitative properties determined from the integrals using proprietary computer programs.

For polypropylene homopolymers all chemical shifts are internally referenced to the methyl isotactic pentad <mmmm> at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984),

1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (\, mmmm \,/\, \text{sum of all pentads}\,)$$

If needed, the absence of ethylene in the high isotactic homopolymer of propylene can be quantified using the method of Wang et. al. (Wang, W-J., Zhu, S., Macromolecules 33 (2000), 1157) through integration of multiple signals across the whole spectral region of a $^{13}C\{^{1}H\}$ spectra acquired using defined conditions. This method was chosen for its accuracy, robust nature and ability to account for the presence of regio-defects, when needed. Integral regions were slightly adjusted to increase applicability to a wider range of comonomer contents.

The ethylene incorporation in mole percent is computed as follows:

$$E\,[mol\%] = 100 * fE$$

The ethylene incorporation in weight percent is calculated as follows:

$$E\,[wt\%] = 100 * (\, fE * 28.05\,) / (\, (fE * 28.05) + ((1-fE) * 42.08)\,)$$

*$MFR_2$*

The $MFR_2$ was measured according to ISO 1133 (at 2.16 kg load) and either at a temperature of 230 °C (for the high isotactic homopolymer of propylene) or at a temperature of 260 °C (cyclic olefin copolymer composition).

*Glass transition temperature Tg*

The glass transition temperature was measured with a differential scanning calorimeter according to ISO 11357 at a scan rate of 10 K/min.

*Melting temperature Tm, crystallization temperature Tc*

Differential Scanning Calorimetry (DSC) experiments were run on a TA Instruments Q2000 device calibrated with Indium, Zinc, Tin according to ISO 11357/1. The measurements were run under nitrogen atmosphere (50 mL $min^{-1}$) on 5±0.5 mg samples in a heat/cool/heat cycle with a scan rate of 10 K/min between -30 °C and 225 °C according to ISO 11357/3. Melting (Tm) and crystallization (Tc) temperatures were taken as the peaks of the endotherms and exotherms in the cooling cycle and the second heating cycle respectively.

*Ash content*

The ash content of the polymer was determined according to measured according to ISO 3451-1 (1997). Doing so, about 100 g of polymer were weighed into a platinum crucible. The crucible is then heated in a Bunsen burner flame so that the polymer slowly burns. After the polymer is completely burned the crucible is cooled, dried and weighed.

The ash content is then the weight of the residue divided by the weight of the polymer sample. At least two measurements are made and if the difference between the measurements is more than 7 ppm then a third measurement is made.

*Dielectric breakdown measurement*

The dielectric breakdown strength, synonymous with the breakdown field and commonly indicated in kV/mm,

is a property of gases, liquids and solids. When the electric field exceeds the breakdown field, breakdown occurs by a discharge channel through the material, connecting the electrodes. In solids, the discharge destroys the material irreversibly, while in gases and liquids damage is temporary and reversible.

Generally, a breakdown event occurs with a high randomness, *i.e.* when identical specimens are tested to establish the breakdown distribution (see details below), high data dispersion is observed and often the data are not normal distributed (see Dissado L. A.; Fothergill J. C."Electrical degradation and breakdown in polymers", IEEE Materials and Devices Series 9, Peter Peregrinus Ltd., 1992). The reason for the random occurrence of breakdown events is the unspecific and localized breakdown initiation, at sites of electric field enhancement and sites of low breakdown strength (see Dissado L. A.; Fothergill J. C. "Electrical degradation and breakdown in polymers", IEEE Materials and Devices Series 9, Peter Peregrinus Ltd., 1992). Generally, structural heterogeneities of the material, inclusions of contaminants or voids (see Chen G.; Davies A.E. The influence of defects on the short-term breakdown characteristics and long-term dc performance of LDPE insulation. IEEE Transactions on Electrical Insulation, 2000, 7, 401-407) and surface roughness (see Rytoluoto L; Gitsas A.; Pasanan S.; Lahti K. Effect of film structure and morphology on the dielectric breakdown characteristics of cast and biaxially oriented polypropylene films. European Polymer Journal, 2017, 95, 606-624) can be potential sites of breakdown and they are inevitable in industrial production.

*Breakdown testing*

Breakdown strength of solids was tested in a short voltage ramp test. At a temperature of 90 °C, a thin specimen of a cast film (250 μm thick) was sandwiched between electrodes and the voltage was increased (linearly, exponentially, in steps, etc.) until breakdown occured. The voltage at which the breakdown occurs is the breakdown voltage (in kV) of the specimen (see IEC 60234-1 (2013) - Electric strength of insulating materials - Test methods - Part 1 : Tests at power frequencies).

One then measures the thickness of the specimen at the breakdown spot to obtain breakdown strength Eb (in kV/mm). This test was repeated on identically prepared specimens of the material to obtain the breakdown distribution of the material (see Rytoluoto T; Gitsas A.; Pasanan S.; Lahti K. Effect of film structure and morphology on the dielectric breakdown characteristics of cast and biaxially oriented polypropylene films. European Polymer Journal, 2017, 95, 606-624).

*Statistical evaluation*

A breakdown distribution obtained from a voltage ramp test typically does not follow a normal distribution, but rather an extreme value distribution of which the Weibull distribution is commonly used (see Dissado L. A.; Fothergill J. C."Electrical degradation and breakdown in polymers", IEEE Materials and Devices Series 9, Peter Peregrinus Ltd., 1992, and IEC 62539 (2007) - Guide for the statistical analysis of electrical insulation breakdown data). The Weibull distribution, as originally proposed, uses three parameters, namely the Scale parameter a, the Shape parameter b and the location parameter 5. The Scale parameter a is the average of the Weibull distribution, used in analogy, but not equivalent to, the mean of a Normal distribution. While the mean is the 50th percentile of the Normal distribution, the Scale parameter a is the 63.2th percentile of the Weibull distribution. When the breakdown strength of a material is meant, most authors inherently refer to the Scale parameter a. The Shape parameter b, as the name suggests, affects the shape of the Weibull distribution, which can look like an exponential distribution for low b or nearly bell shaped like the Normal distribution, for high b. As such high b implies low dispersion and bell shape. The location parameter d is a "shift constant", as it moves the experimental distribution to the origin, *i.e.* failure probability is zero when Eb-d = 0. However, d is often not required, assumed zero, and authors apply the Weibull distribution with two parameters, *i.e.* only using a and b.

*Measurement details*

Measured breakdown strength and breakdown distribution are influenced by several experimental details such as use of direct or alternating current (Krentz T.; Khani M. M.; Bell M.; Benicewicz B. C.; Nelson J. K.; Zhao S.; Schadler L. S. Morphologically dependent alternating-current and direct-current breakdown strength in silica- polypropylene nanocomposites. Journal of Applied Polymer Science , 2017, 134) and voltage ramp rate (Rytoluoto L; Ritamaki M.; Lahti K.; Karttunen M. Ramp rate effect on the breakdown response of SiCk-BOPP Nano composites, IEEE International conference on the properties of applications of dielectric materials , 2015, 496-499). One further important experimental detail is the measured volume. Specimen thickness and (electrode) area influence breakdown strength (see Laihonen S. J. et al. "Area dependence of breakdown strength of polymer films: automatic measurement method." IEEE Transactions on dielectrics and electrical insulation , 2007, 14, 263-274, and Rytoluoto L; Lahti K. Effect of film thickness and electrode area on the dielectric breakdown characteristics of metallized film capacitor films, 23rd Nordic Insulation

Symposium (Nordis 13), 2013, 33-38), and need to be reported with the breakdown results.

Linked to the volume effect on breakdown strength is the electrode geometry such as shape and size. Typical electrode geometries include parallel plate-plate, cylinder-plate and sphere-plate designs. In the latter, the active electrode area is just the contact area between sphere and specimen, hence the stressed active area of the specimen is far smaller than the electrode diameter. Moreover, breakdowns via the air gap between electrode and film outside the contact area can occur, affecting breakdown statistics.

Next to the electrode designs, the data acquisition technique plays a role, such as how many specimens are tested to establish the breakdown distribution. In general, the more specimens are tested, the more extreme results will be found, i.e. more of the very low Eb and the very high Eb will be measured and this will affect the breakdown distribution. In the common voltage ramp test described above, specimens are broken down individually and subsequently. Each new specimen is subjected to a new voltage ramp starting from zero voltage, and breakdown will always occur at the weakest spot of the specimen, which will stop the voltage ramp. Even if the specimen has stronger spots, they are not measured, i.e. the strongest parts of the specimen, and typically of the material, are not tested. While the more specimens are tested, the higher the chance that also high breakdown strength results are included in the distribution, this individual specimen-by specimen method biases the breakdown distribution towards lower breakdown strengths.

Advanced automated breakdown measurement methods exist (see Boggs S. A.; Ho J.; Jo T.R.; Overview of Laminar Dielectric Capacitors, Electrical Insulation Magazine, 2010, 26, 7-13, and Rytoluoto L; Lahti K. New approach to evaluate area-dependent breakdown characteristics of dielectric polymer films, Transactions on Dielectrics and Electrical Insulation , 2013, 20, 937-946, and Kerwien C.M.; Malandro D.L.; Broomall J.R., Large area DC dielectric breakdown voltage measurement of BOPP and PTFE thin films, IEEE Conference on Insulation and Dielectric Phenomena, 2016, 486-489, and Laihonen S. J. et al. "Area dependence of breakdown strength of polymer films: automatic measurement method." IEEE Transactions on dielectrics and electrical insulation, 2007, 14, 263-274) of which one sub-type measures all individual breakdowns in one voltage ramp (multiple breakdowns) on the same specimen (area) i.e. the full breakdown distribution (see Boggs S. A.; Ho J.; Jo T.R.; Overview of Laminar Dielectric Capacitors, Electrical Insulation Magazine, 2010, 26, 7-13 and Rytoluoto L; Lahti K. New approach to evaluate area- dependent breakdown characteristics of dielectric polymer films, Transactions on Dielectrics and Electrical Insulation, 2013, 20, 937-946). By this method, after the weaker parts of the specimen have broken down, stronger parts of the specimen break down as the voltage keeps rising. Consequently, breakdown distributions obtained by such a test usually include very high breakdown strengths and thus this method biases the breakdown distribution towards higher breakdown strengths than the manual individual method.

In summary, when reporting breakdown data, direct comparison is possible between materials using the same test method, area, voltage ramp rate and same statistical evaluation, but comparisons between different tests are not possible.

*Conductivity*

Electrical conductivity was calculated as the inverse of the electrical resistance as determined in accordance with ASTM D257.

*Dielectric Analysis (DEA)*

Dielectric Analysis (DEA) is done on a DEA 2070 of TA-Instruments with a gold coated sputter. Measurements are conducted at a ramp of 3 °C/min to 130 °C at 50 Hz and a constant spring force (F) of 100 N.

Dielectric analysis measures capacitance and conductivity as a function of two basic electrical properties of a material: time, temperature and frequency. The capacitance of a material is the ability to store the charge and the conductivity of the material is the ability to conduct the charge. Capacitance and conductivity are important characteristics. The dissipation is independent of the thickness, or the orientation angle of the film.

The properties measured by the dielectric analysis are as follows:

e' = real part of permittivity (dielectric constant)

e" = imaginary part of permittivity (loss rate)

$$\tan\delta = \text{loss tangent } (e''/e')$$

$$\sigma = \text{ion conductivity } [1/\Omega\text{cm}].$$

Conductivity is proportional to the dielectric constant and ionic conductivity is derived from the loss rate. Both the dielectric constant and the loss rate provide valuable information about molecular motion. The dielectric constant determines the arrangement of the dipoles, and the loss ratio corresponds to the energy required to arrange the dipole and move the ions. The dielectric constant is low for polymers at low temperatures because the dipole cannot move to align itself by the electric field. Ionic conductivity is not significant until the polymer becomes a fluid, i.e., until the glass transition temperature (Tg) and the melting temperature (Tm) are exceeded.

Above the glass transition temperature, the loss rate is used to calculate the bulk ion conductivity, using the following equation:

$$\sigma = e'' \omega e_0$$

$$\sigma = \text{ion conductivity}$$

$$\omega = \text{angular frequency } (2\pi f)$$

$$f = \text{frequency (Hz)}$$

$$e_0 = \text{absolute permittivity of free space } (8.85 \text{ x } 10\text{-}12 \text{ F / m})$$

*Dielectric spectroscopy measurements*

Dielectric spectroscopy measurements were conducted on films using a Novocontrol Alpha frequency analyzer, at a temperature of 120 °C and atmospheric pressure. The frequency range of the DS measurements was from $10^{-2}$ to $10^{6}$ Hz. A piece of film appropriately cut was placed between two identical electrodes with a diameter of 40 mm. The measurements were performed under a nitrogen atmosphere.

*Atomic force microscope images*

All specimens were taken directly from film samples and cut on an ultra-cryo microtome in the core of the films and perpendicular to the machine direction (MD). No surface treatment has been performed. In addition to the "normal" scan a qualitative amplitude-frequency-modulation (AM-FM) was made, because this approach gives better differentiation of the different phases. Comparisons were made based one images of 20 × 20 $\mu m^2$ large surface areas of the film.

Materials

The polymers as listed in table 1 below have been used to prepare example materials.

**Table 1:** Polymers used for the production of CE1, CE2 and IE1-IE3.

| | |
|---|---|
| HIPP 1 | Capacitor high isotacticity homopolymer PP<br>$MFR_2$ = 3.3 g/10min, Tc =115 °C,<br>Ash content < 20 ppm, <mmmm> = 97.2%<br>Commercially available as HC300BF from Borealis |
| HIPP2 | Capacitor high isotacticity homopolymer PP<br>$MFR_2$ =3.0 g/10min, Tc = 113 °C<br>Ash content < 20 ppm, <mmmm> = 96.8%<br>Produced in the same way as CE2a of WO 2021/239594 A1 |
| COC1 | Ethylene-norbornene copolymer<br>Tg = 158 °C<br>$MFR_2$ = 5<br>Norbornene content = 79.0 wt.-% |

(continued)

| | |
|---|---|
| | Commercially available as TOPAS COC 6015S-04 from TOPAS |
| COC2 | Ethylene-norbornene copolymer<br>Tg = 138 °C<br>$MFR_2$ = 14<br>Norbornene content = 76.0 wt.-%<br>Commercially available as TOPAS COC 6013S-04 from TOPAS |
| Blend 1 | Blend of<br>50 wt.-% TOPAS COC 6013S-04 and<br>50 wt.-% TOPAS COC 6015S-04<br>$MFR_2$ = 10<br>Tg = 147 °C<br>Norbornene content = 77.5 wt.-% |
| Blend 2 | Blend of<br>75 wt.-% TOPAS COC 6013S-04 and<br>25 wt.-% TOPAS COC 6015S-04<br>$MFR_2$ = 12<br>Tg = 142 °C<br>Norbornene content = 76.8 wt.-% |

The above polymers have been combined in the amounts indicated in table 2 below and have been melt-blended in order to form example materials CE1, CE2 and IE1-IE3. Example materials CE2 and IE1-IE3 are polypropylene compositions comprising a certain amount of a cyclic olefin polymer. Example material CE1 is a pure high isotactic homopolymer of polypropylene.

**Table 2:** Compositions of sample materials CE1, CE2 and IE1-IE3.

| | **CE1** | **CE2** | **IE1** | **IE2** | **IE3** |
|---|---|---|---|---|---|
| **HIPP1 in wt.-%** | 100 | 85 | | 85 | 80 |
| **HIPP2 in wt.-%** | | | 85 | | |
| **COC1 in wt.-%** | | 15 | | | |
| **Blend 1 in wt.-%** | | | 15 | | |
| **Blend 2 in wt.-%** | | | | 15 | 20 |

Film samples have been produced from the sample materials on a small-scale laboratory blown film line from company COLLIN Lab & Pilot Solutions GmbH. The line consists of an extruder with a Ø 30 mm screw with an L/D ration of 30. The extruder temperature has been set at 235 °C, the melt temperature was 235°C and has been recorded after 45 min of process stabilization. The extruder is followed by a die with a width of 300 mm. The die has a flexible die lip with a die gap of 0.5 - 1.5 mm. The line has been run at a constant throughput of 8 kg/h and a line speed of 10 m/min. The end width of the film was cut to 270 mm. The film was produced with a thickness of 250 $\mu$m.

Afterwards, conductivity has been measured on the films of CE1, CE2 and IE1-IE3 with varying frequency. The frequency dependence can be derived from **figure 1**. It was found that the propylene compositions, comprising a cyclic olefin polymer, such as CE2 and IE1-IE3, have a lower conductivity than the pure high isotactic homopolymer of polypropylene CE1 across the whole measured frequency range.

At the low-frequency end of about $10^{-2}$ to $10^{-1}$ Hz, which is of particular importance for PP capacitors, IE2 is the most effective.

The energy dissipation capacity at different frequencies has been assessed based on the loss tangent tan $\delta$. Therefore, the imaginary part of permittivity, $\varepsilon'$, and the real part of permittivity, $\varepsilon''$, have been measured and tan $\delta$ has been computed as the ratio $\varepsilon'/\varepsilon''$. A plot of tan $\delta$ against the frequency may be found in **figure 2**. Generally, a better the energy storage performance as well as lower the risk of damage due to local increase of temperature is expected for lower tan $\delta$ values. Thus, propylene composition IE2 scores best, with a particular superiority over the other compositions

and the pure high isotactic polymer of propylene at the low-frequency end.

**Figure 3** is a bar diagram which allows conclusions on the breakdown endurance of the films made from CE1, CE2 and IE1. It may be seen that the breakdown voltage of IE1 is increased over the breakdown voltages of CE1 and CE2 by about 10%.

The morphology of the films made from CE2 and IE1-IE3 has been examined with atomic force microscopy. From the AFM-images in **figures 4(a)-(d)** it may be concluded that the dispersion quality of compositions IE1-IE3 is much better than the one of composition CE2. Without wishing to be bound by theory, it is believed that this is an indicator for a higher homogeneity and the improved overall macroscopic dielectric performance of IE1-3.

## Claims

**1.** Polypropylene composition comprising

70 to 95 wt.-% based on the total weight of the polypropylene composition of a high isotactic homopolymer (A) of propylene, and
5 to 30 wt.-% based on the total weight of the polypropylene composition of a cyclic olefin polymer composition (B) having a glass transition temperature, measured according to ISO 11357, in a range of from 140 to 155 °C.

**2.** Polypropylene composition according to claim 1, wherein the cyclic olefin polymer composition (B) has a glass transition temperature in the range of from 140 to 150 °C or in the range from 145 to 155 °C.

**3.** Polypropylene composition according to one of the preceding claims, wherein the cyclic olefin polymer composition (B) has a $MFR_2$ (260 °C), measured according to ISO 1133, of from 2 to 50 g/10 min, preferably from 8 to 25 g/10 min.

**4.** Polypropylene composition according to one of the preceding claims, wherein the cyclic olefin polymer composition (B) is a cyclic olefin copolymer composition,

preferably a cyclic olefin copolymer composition comprising
cyclic olefin units, for example norbornene units, in a content of from 70 to 90 wt.-%, preferably from 75 to 85 wt.-%, more preferably from 75 to 80 wt.-%, and
non-cyclic olefin units, for example ethylene units, in a content of from 10 to 30 wt.-%, preferably from 15 to 25 wt.-%, more preferably from 20 to 25 wt.-%,
wherein the contents are each based on the total weight of the cyclic olefin polymer composition (B).

**5.** Polypropylene composition according to one of the preceding claims comprising

75 to 90 wt.-%, preferably 79 to 86 wt.-%, more preferably 81 to 86 wt.-%, of the high isotactic homopolymer (A) of propylene, and
10 to 25 wt.-%, preferably 14 to 21 wt.-%, more preferably 14 to 19 wt.-%, of the cyclic olefin polymer composition (B), wherein the contents are each based on the total weight of the polypropylene composition.

**6.** Polypropylene composition according to one of the preceding claims, wherein the cyclic olefin polymer composition (B) comprises at least one cyclic olefin copolymer selected from the group of norbornene-ethylene copolymers and tetracyclododecene-ethylene copolymers or a blend of at least two of said cyclic olefin copolymers.

**7.** Polypropylene composition according to one of the preceding claims, wherein the cyclic olefin polymer composition (B) comprises at least a first cyclic olefin polymer (b1) and a second cyclic olefin polymer (b2),
wherein the first cyclic olefin polymer (b1) preferably has a glass transition temperature, measured according to ISO 11357, of below 140 °C, in particular of from 60 to below 140°C, and the second cyclic olefin polymer (b2) preferably has a glass transition temperature, measured according to ISO 11357, of at least 155 °C, in particular of from at least 155 to 190°C.

**8.** Polypropylene composition according to one of the preceding claims, wherein the high isotactic homopolymer (A) of propylene has at least one of:

• a content of isotactic pentad fraction, measured with $^{13}C$ NMR, of from 93 to 99.5 %, preferably 95 to 99.0 %, more preferably from 96 to 98.5 %,

- a $MFR_2$ (230 °C), measured according to ISO 1133, of from 0.4 to 10 g/10 min, preferably of from 0.5 to 5 g/10 min,
- an ash content, measured according to ISO 3451-1 (1997), of 60 ppm or less, preferably 30 ppm or less,
- a crystallization temperature (Tc), measured according to ISO 11357, of from 110 to 130°C, preferably from 110 to 120°C.

**9.** Polypropylene composition according to one of the preceding claims obtained by melt-blending the high isotactic homopolymer (A) of propylene and the cyclic olefin polymer composition (B), wherein optionally the cyclic olefin polymer composition (B) is itself obtained by melt-blending at least two different cyclic olefin polymers.

**10.** Cast film comprising the polypropylene composition according to one of the preceding claims.

**11.** Cast film according to claim 10, having a dielectric breakdown voltage of 118 kV/mm or more, preferably 125 kV/mm or more, wherein the dielectric breakdown voltage is measured according to IEC 60243-1 at 90 °C and on the cast film having a thickness of 250 μm.

**12.** Cast film according to one of claims 10 and 11, having a loss tangent of less than 0.001, preferably less than 0.0005, more preferably less than 0.0002, wherein the loss tangent is measured at 20 Hz and 120 °C according to the method in the description.

**13.** Cast film according to one of claims 10 to 12, having a conductivity of 2 fS/cm or less when measured according to IEC62631-3-2 with an alternating current in a frequency range of from $10^{-2}$ to $10^{-1}$ Hz, or when taken as the inverse of the DC electrical resistance measured according to ASTM D257, each at a temperature of 90 °C and on the cast film having a thickness of 250 μm.

**14.** Biaxially oriented film comprising the polypropylene composition according to one of claims 1 to 9.

**15.** Capacitor comprising the biaxially oriented film according to claim 14.

Figure 1

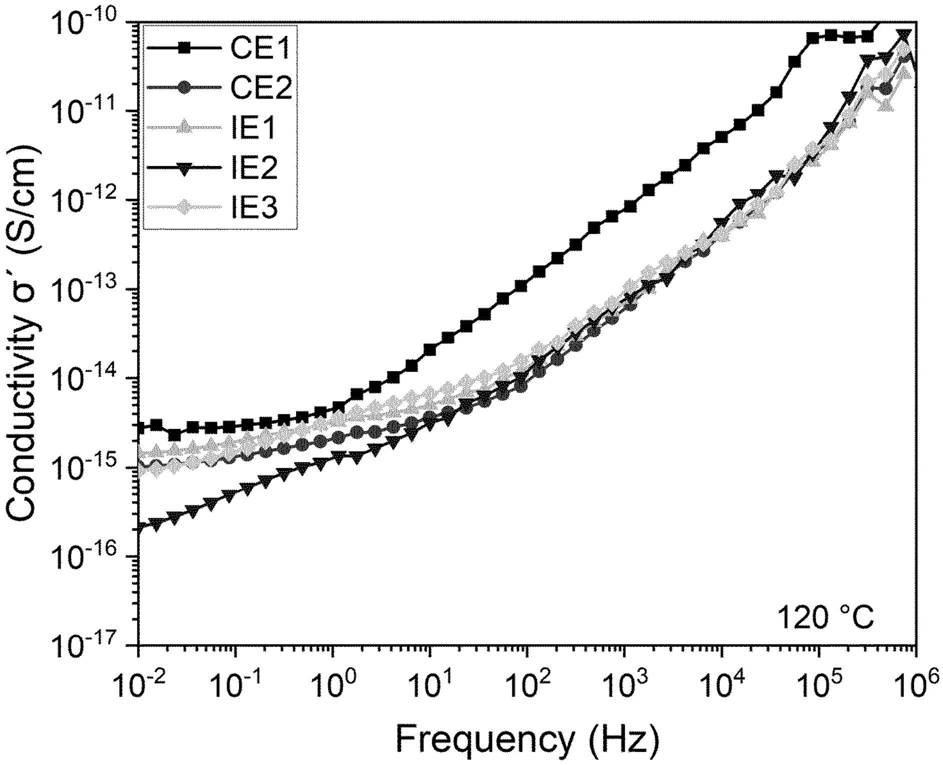


Figure 2

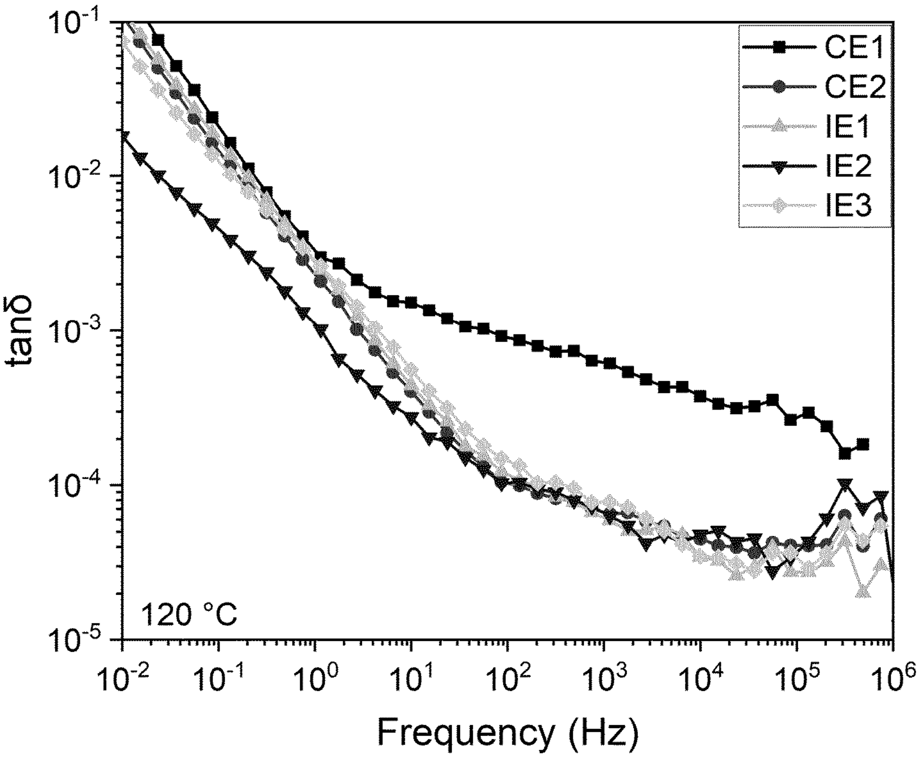

Figure 3

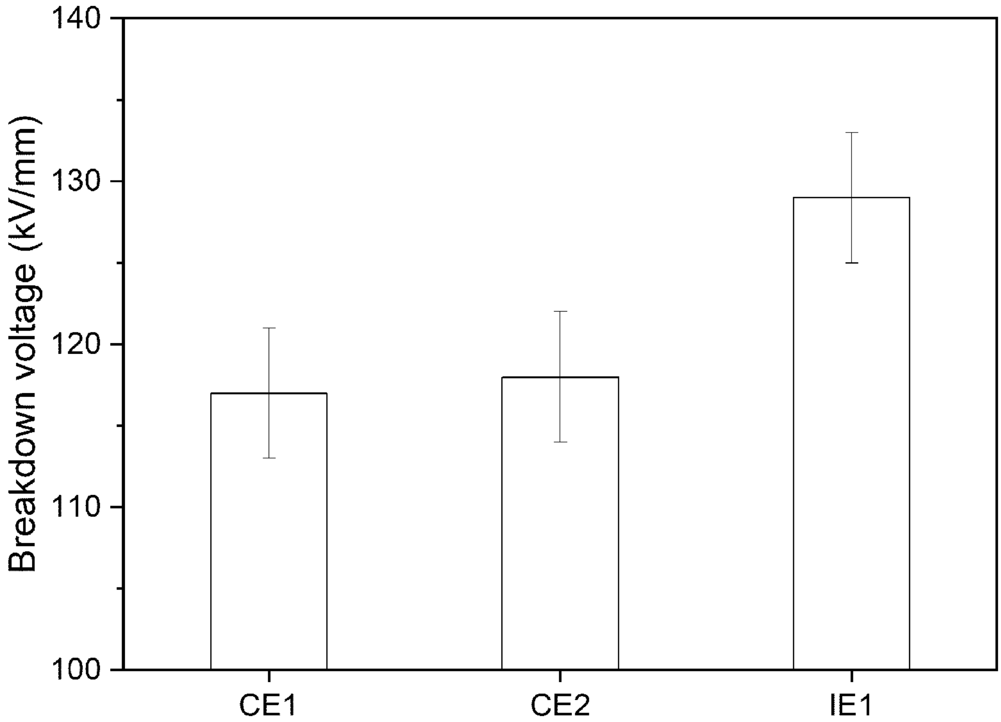

**Figure 4**

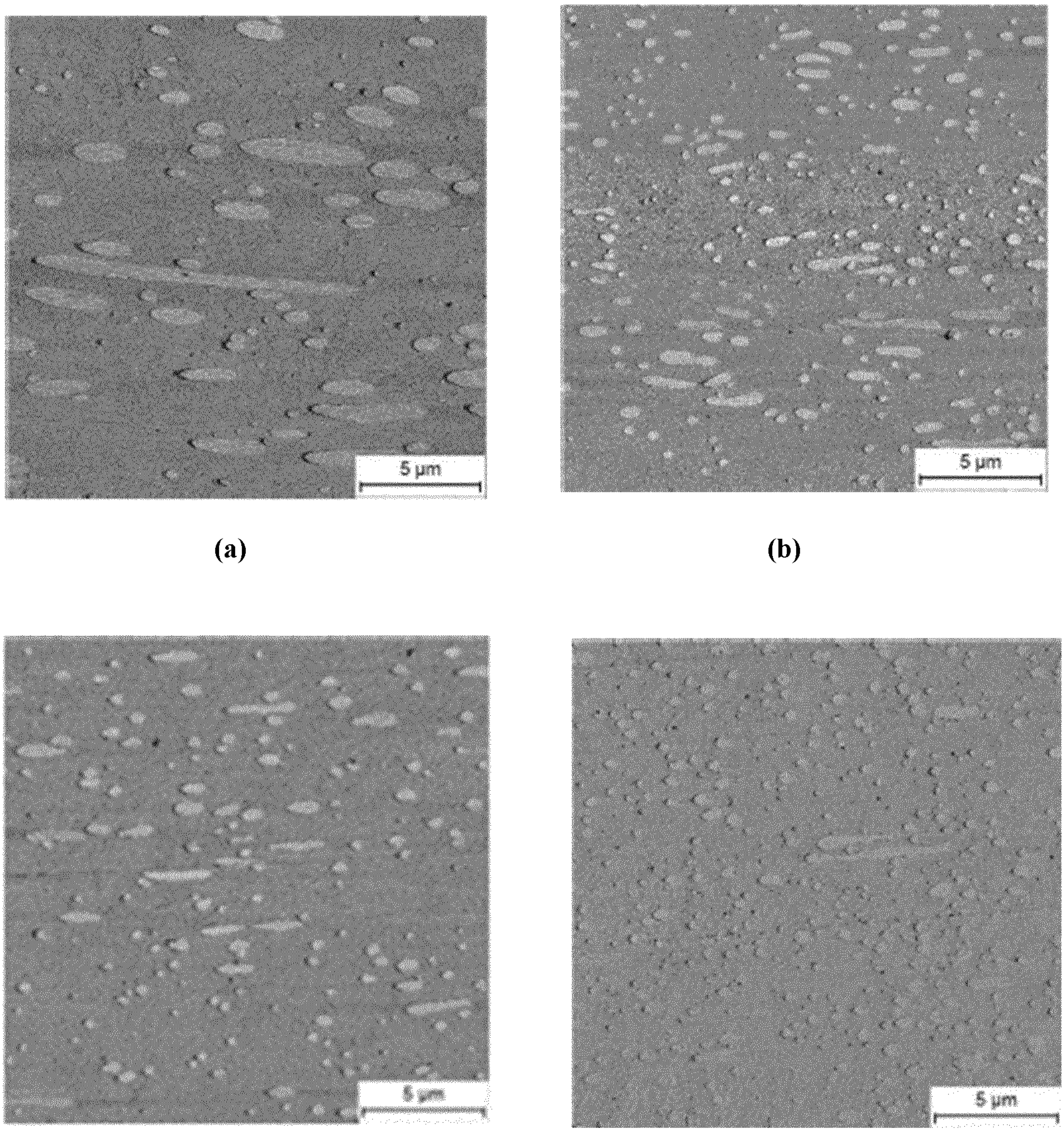


(a) (b) (c) (d)

Europäisches Patentamt
European Patent Office
Office européen des brevets

# EUROPEAN SEARCH REPORT

Application Number
EP 23 17 3463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/147645 A1 (GOERLITZ WOLFRAM [DE]) 20 May 2021 (2021-05-20) * paragraphs [0002], [0030], [0042], [0044], [0055], [0131] - [0133]; examples 3,4,6; table 1 * ----- | 1-15 | INV. C08J5/18 C08L23/12 |
| X | EP 4 174 120 A1 (BRUECKNER MASCHB GMBH & CO KG [DE]) 3 May 2023 (2023-05-03) * paragraphs [0001], [0116], [0123]; examples 1-5; table 4 * ----- | 1-15 | |
| X | DE 10 2020 006588 A1 (TOPAS ADVANCED POLYMERS GMBH [DE]) 28 April 2022 (2022-04-28) * paragraphs [0027], [0030], [0035], [0039]; claims 1,5,7; examples 1-4; table 1 * ----- | 1-15 | |
| A | US 2021/079179 A1 (ALBA CARLOS [ES] ET AL) 18 March 2021 (2021-03-18) * the whole document * ----- | 1-15 | |

| TECHNICAL FIELDS SEARCHED (IPC) |
|---|
| C08J |
| C08L |

The present search report has been drawn up for all claims

1

| Place of search | Date of completion of the search | Examiner |
|---|---|---|
| Munich | 6 November 2023 | Iraegui Retolaza, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 17 3463

This annex lists the patent family members relating to the patent documents cited in the above-mentioned European search report. The members are as contained in the European Patent Office EDP file on
The European Patent Office is in no way liable for these particulars which are merely given for the purpose of information.

06-11-2023

| Patent document cited in search report | Publication date | Patent family member(s) | Publication date |
|---|---|---|---|
| US 2021147645 A1 | 20-05-2021 | CN 110546190 A | 06-12-2019 |
| | | DE 102017004111 A1 | 31-10-2018 |
| | | EP 3615597 A1 | 04-03-2020 |
| | | JP 7084469 B2 | 14-06-2022 |
| | | JP 2020521867 A | 27-07-2020 |
| | | KR 20200086222 A | 16-07-2020 |
| | | US 2021147645 A1 | 20-05-2021 |
| | | WO 2018197034 A1 | 01-11-2018 |
| EP 4174120 A1 | 03-05-2023 | CN 116063791 A | 05-05-2023 |
| | | DE 102021128332 A1 | 04-05-2023 |
| | | EP 4174120 A1 | 03-05-2023 |
| | | JP 2023067823 A | 16-05-2023 |
| | | KR 20230062415 A | 09-05-2023 |
| DE 102020006588 A1 | 28-04-2022 | CN 116368175 A | 30-06-2023 |
| | | DE 102020006588 A1 | 28-04-2022 |
| | | EP 4237471 A1 | 06-09-2023 |
| | | KR 20230104643 A | 10-07-2023 |
| | | WO 2022089771 A1 | 05-05-2022 |
| US 2021079179 A1 | 18-03-2021 | CN 110914939 A | 24-03-2020 |
| | | DE 102017118202 A1 | 15-11-2018 |
| | | EP 3625811 A1 | 25-03-2020 |
| | | ES 2912779 T3 | 27-05-2022 |
| | | JP 6799179 B2 | 09-12-2020 |
| | | JP 2020520127 A | 02-07-2020 |
| | | US 2021079179 A1 | 18-03-2021 |
| | | WO 2018210854 A1 | 22-11-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 101724195 A
- EP 2995641 A1
- WO 2018210854 A1
- WO 2018197034 A1
- WO 2021239594 A1

### Non-patent literature cited in the description


- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- Electrical degradation and breakdown in polymers. **DISSADO L. A. ; FOTHERGILL J. C.** IEEE Materials and Devices Series. Peter Peregrinus Ltd, 1992, vol. 9
- **CHEN G. ; DAVIES A.E.** The influence of defects on the short-term breakdown characteristics and long-term dc performance of LDPE insulation. *IEEE Transactions on Electrical Insulation,* 2000, vol. 7, 401-407
- **RYTOLUOTO L ; GITSAS A. ; PASANAN S. ; LAHTI K.** Effect of film structure and morphology on the dielectric breakdown characteristics of cast and biaxially oriented polypropylene films. *European Polymer Journal,* 2017, vol. 95, 606-624
- **RYTOLUOTO T ; GITSAS A. ; PASANAN S. ; LAHTI K.** Effect of film structure and morphology on the dielectric breakdown characteristics of cast and biaxially oriented polypropylene films. *European Polymer Journal,* 2017, vol. 95, 606-624
- **KRENTZ T. ; KHANI M. M. ; BELL M. ; BENICEWICZ B. C. ; NELSON J. K. ; ZHAO S. ; SCHADLER L. S.** Morphologically dependent alternating-current and direct-current breakdown strength in silica- polypropylene nanocomposites. *Journal of Applied Polymer Science,* 2017, 134
- **RYTOLUOTO L ; RITAMAKI M. ; LAHTI K. ; KARTTUNEN M.** Ramp rate effect on the breakdown response of SiCk-BOPP Nano composites. *IEEE International conference on the properties of applications of dielectric materials,* 2015, 496-499
- **LAIHONEN S. J. et al.** Area dependence of breakdown strength of polymer films: automatic measurement method. *IEEE Transactions on dielectrics and electrical insulation,* 2007, vol. 14, 263-274
- **RYTOLUOTO L ; LAHTI K.** Effect of film thickness and electrode area on the dielectric breakdown characteristics of metallized film capacitor films. *23rd Nordic Insulation Symposium (Nordis 13),* 2013, 33-38
- **BOGGS S. A. ; HO J. ; JO T.R.** Overview of Laminar Dielectric Capacitors. *Electrical Insulation Magazine,* 2010, vol. 26, 7-13
- **RYTOLUOTO L ; LAHTI K.** New approach to evaluate area-dependent breakdown characteristics of dielectric polymer films. *Transactions on Dielectrics and Electrical Insulation,* 2013, vol. 20, 937-946
- **KERWIEN C.M. ; MALANDRO D.L. ; BROOMALL J.R.** Large area DC dielectric breakdown voltage measurement of BOPP and PTFE thin films. *IEEE Conference on Insulation and Dielectric Phenomena,* 2016, 486-489
- **RYTOLUOTO L ; LAHTI K.** New approach to evaluate area- dependent breakdown characteristics of dielectric polymer films. *Transactions on Dielectrics and Electrical Insulation,* 2013, vol. 20, 937-946